# EUROPEAN PATENT SPECIFICATION

(11) **EP 1 559 064 B1**
(45) Date of publication and mention of the grant of the patent: **02.02.2011**
(21) Application number: 03756771.6
(22) Date of filing: 24.10.2003
(51) Int. Cl.: G06K 11/06, G06F 3/033

(54) **AN INFORMATION PROCESSING SYSTEM CONTAINING AN ARRANGEMENT FOR ENABLING PRINTING ON DEMAND OF POSITION CODED BASES**
INFORMATIONSVERARBEITUNGSSYSTEM MIT EINERANORDNUNG ZUR ERMÖGLICHUNG VON AUSDRUCK AUF BEDARF VON POSITIONSCODIERTEN BASEN
SYSTEME DE TRAITEMENT D'INFORMATIONS CONTENANT UN AGENCEMENT PERMETTANT D'IMPRIMER A LA DEMANDE DES BASES CODEES EN POSITION

(30) Priority: 24.10.2002 SE 0203128; 25.10.2002 US 421055 P
(43) Date of publication of application: 03.08.2005
(73) Proprietor: Anoto AB, 227 22 Lund (SE)
(72) Inventor: SKANTZE, Kristofer, S-222 29 Lund (SE); HOLLMAN, Joachim, S-116 20 Stockholm (SE); LYNGGAARD, Stefan, S-227 38 Lund (SE)
(74) Representative: Perklev, Karin Cecilia
(86) International application number: PCT/SE2003/001643
(87) International publication number: WO 2004/038651

(56) References cited:
- WO-A1-01/48591
- WO-A1-01/71473
- WO-A1-01/75781
- WO-A1-02/19260
- WO-A1-02/75629
- WO-A1-99/50787

## Description

### Cross-reference to Related applications

The present application claims the benefit of Swedish patent application No. 0203128-4, filed on October 24, 2002, and U.S. Provisional patent application No. 60/421,055, filed on, October 25, 2002, which both are hereby incorporated by reference.

### Field of the Invention

The present invention relates generally to collecting and processing of information. More specifically, the invention concerns processing of information detected on a position-coded base, and generation of such position-coded bases.

### Background Art

Traditionally, information is collected by using preprinted forms that are distributed to one or more users with a request to fill in and return the form.

The information noted on the forms by the users is then inputted, either manually or by automated scanning and interpretation, into an electronic information processing system. Such collecting of information is laborious and time-consuming work and involves a risk of inputting incorrect information into the system.

In WO 01/48685, WO 01/48678 and WO 01/48591, which are herewith incorporated by reference, the present applicant has therefore suggested information processing systems based on forms containing a position code. The position code, which codes a plurality of positions on the form, enables electronic detection of information that is written on the form by means of a digital pen which detects the position code. By connecting different positions on the form to different measures, a receiving unit may be caused to automatically extract the desired data from the electronically detected information. In the system also the receiving unit can be identified by the detected positions. In fact, the position code enables coding of coordinates for a large number of positions, many more than the number of necessary positions on the individual form. Thus it may be regarded as a virtual position surface being made up by all the positions which the position code is capable of coding. By dedicating different parts of the position surface to different operators, the detected information can be automatically directed from the pen to the correct operator for processing.

Moreover Applicant's Patent Publication WO 02/19260, which is herewith incorporated by reference, discloses a development tool for producing on the one hand a position-coded base to be distributed to users of digital pens and, on the other hand, software for receiving and processing the information detected by the pens on the base.

Furthermore Applicant's Patent Publication WO 01/71475 discloses a system for multi-party editing of documents. The system allows a coordinator to create on a local unit an electronic document, to allocate by a central processing unit an area of the above position surface, and to request printing of one or more position-coded bases corresponding to the electronic document. The central processing unit later receives editing information which is detected by means of digital pens on the bases. The editing information is allowed to operate on the electronic document and the result of this is presented to the user on the local unit. Thus the system is connected to one and the same coordinator initiating the collecting of data and being presented the result thereof.

### Summary of the Invention

An object of the invention therefore is to overcome the limitations of the above-described prior-art technique. More specifically, the invention aims at providing a general and transparent system for generation on demand of position-coded bases. By transparent is meant that each user is allowed to be unaware of the flow of data in the system, independently of whether the user has the role of creating the electronic document, requesting generation of the base or using a digital pen in the system.

These and other objects that will be evident from the following description are now wholly, or at least partly, achieved by arrangements according to claims 1, 23 and 30, an information processing system according to claim 33, and methods according to claims 34, 41 and 45. Preferred embodiments are defined in the dependent claims.

### Brief Description of the Drawings

The invention and its advantages will be described in more detail below with reference to the accompanying schematic drawings which by way of example illustrate currently preferred embodiments.
Fig. 1 is a view of a base containing a graphics layer and a coding layer.
Fig. 2 is a view of an arrangement for recording a document in an information processing system.
Fig. 3 is a view of an arrangement for printing on demand of a position-coded base.
Fig. 4 is a view of an information processing system based on position-coded bases and digital pens.
Figs 5-8 are views of alternative embodiments.

### Description of Preferred Embodiments

Now follows a description of different arrangements for enabling printing on demand of bases with embedded functionality, for use in an information processing system.

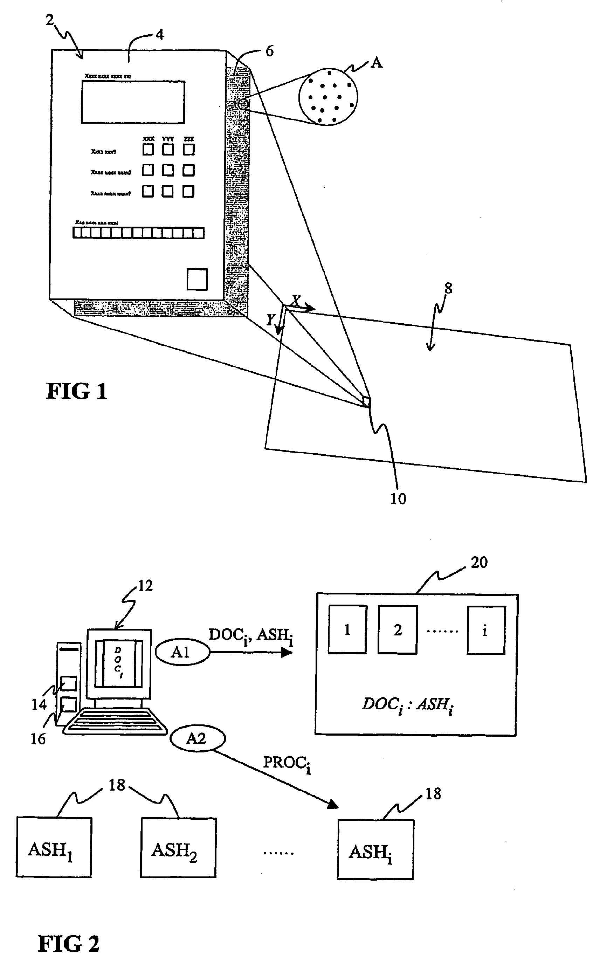

Such a base 2, shown in Fig. 1, contains on the one hand a graphics layer 4 with human readable information and, on the other hand, a coding layer 6 with computer readable position information. In Fig. 1, the graphics layer and the coding layer have been separated from each other for reasons of clarity.

The graphics layer 4 contains such information as is usually created by an individual and applied to a substrate to be understood by other people. The graphics layer may thus contain text, images, figures, frames, lines etc. and aim at instructing, controlling and/or informing a user. For example, the graphics layer may define a form, a poll, an e-mail, a fax form, a draft text, a drawing etc.

The coding layer 6 contains a position code which codes positions in the entire area or parts of the area covered by the graphics layer 4. The coding layer 6 is thus incorporated in the base 2 in a given spatial relationship with the graphics layer 4.

Fig. 1 shows an enlarged section A of the position code in the coding layer 6. The position code may be of the kind as described in WO 01/26032, which is herewith incorporated by reference. Such a position code is capable of coding a very large number of positions, considerably more than can be incorporated in an individual base. This can be regarded as the position code making up a virtual surface 8 of global positions, and one or more subsets 10 of these global positions being coded in the coding layer 6.

The virtual position surface 8, which contains continuous sequences of positions in at least two dimensions, can be logically divided into different sections, as disclosed in aforesaid WO 01/48685. The sections can in turn be divided into "segments", each containing a number of "shelves" which can be divided into "books", each containing a number of so-called logic pages. The position of a certain logic page on the virtual surface can thus be noted as a page address of the form: section.segment.shelf.book.page, for instance 1.231.841.334.226, more or less like an IP address. With knowledge of this division, a global position on the virtual position surface 8 can be converted into a page address and a local position on the corresponding virtual position page 10. Thus, it is possible to map pages on the virtual position surface 8 against physical bases.

However, it should be pointed out that the virtual position surface 8 need not be given a logic page division. Instead, spatially separate parts of the virtual position surface 8 can be mapped against an individual physical base, as also disclosed in aforesaid WO 01/48685.

The position code in the coding layer 6 can alternatively be of the kind described in WO 99/50787, which is herewith incorporated by reference. Here the position code makes up a position space which is predivided into pages. All pages contain the same positions and are distinguished by a unique page identity. Thus both local positions on the base and the unique page identity are coded directly by the position code in the coding layer 6.

For either kind of position code, the positions in the coding layer 6 are connected on the one hand to the graphic information in the graphics layer 4 and, on the other hand, to measures in an information processing system, thereby creating active areas on the base 2. By active areas are thus meant areas on a base which are connected to measures in the information processing system.

The information processing system contains a digital writing unit, in the following referred to as digital pen, which is capable of physically making a mark on the base 2 using a pen point and at the same time reading the position code on the same. Such a pen is described in the above-mentioned WO 01/26032. Thus the digital pen detects by the position code its absolute location on the base 2 and can thus create an electronic version of its motion over the base 2. The pen is also capable of communicating such detected position information, which can correspond to physical strokes on the base 2, to a service handler on a server in the information processing system.

The service handler receives the position information and processes this while using the known connection between measures and positions on the base.

Printing on demand of this type of base involves at least three separate processes which must be coordinated in the information processing system: 1) creating the graphics layer, 2) assigning position data to the coding layer, and 3) processing received position data in the service handler.

### First embodiment of information processing system

Fig. 2 illustrates an arrangement for creating the graphics layer 4 and connecting this to a service handler in the system.

A graphics file DOCᵢ is created on a designing computer 12 using an arbitrary, conventional program 14 for e.g. word processing, image processing, drawing or desktop publishing. The designing computer 12 also contains a conversion program 16 which allows the user to select and/or define active areas in the graphics layer 4. The conversion program outputs a definition file, called a PAD file, which defines the position of each active area in a local coordinate system. This coordinate system can be defined relative to an arbitrary reference point on the base 2, for instance a corner. In the case of the virtual position surface 8 being divided into logic pages of a known size, the local coordinate system can be defined relative to a reference point on such a logic page. The PAD file can then be used by a manually, or automatically, created processing program PROCᵢ to associate received position information with the respective active area and process this according to an associated measure/associated measures.

Alternatively, the processing program PROCᵢ can be created to operate without access to a PAD file. In this case, the definition data of the PAD file is incorporated in the processing program.

The processing program PROCᵢ is then stored, optionally together with the PAD file, at a unique network address ASHᵢ in the system to form the above-mentioned service handler 18 (step A2).

The system contains a graphics repository 20 with a first interface for receiving and storing graphics files. Thus, the corresponding graphics file DOCᵢ may be registered in the graphics repository 20 by being stored therein in association with the unique address ASHᵢ (step A1). If the network is based on the Internet, the address can be, for instance, a URL (Uniform Resource Locator) or an IP address (Internet Protocol). Generally, the system contains many different services handlers 18, which can be stored on one and the same physical unit or be distributed among a plurality of physical units.

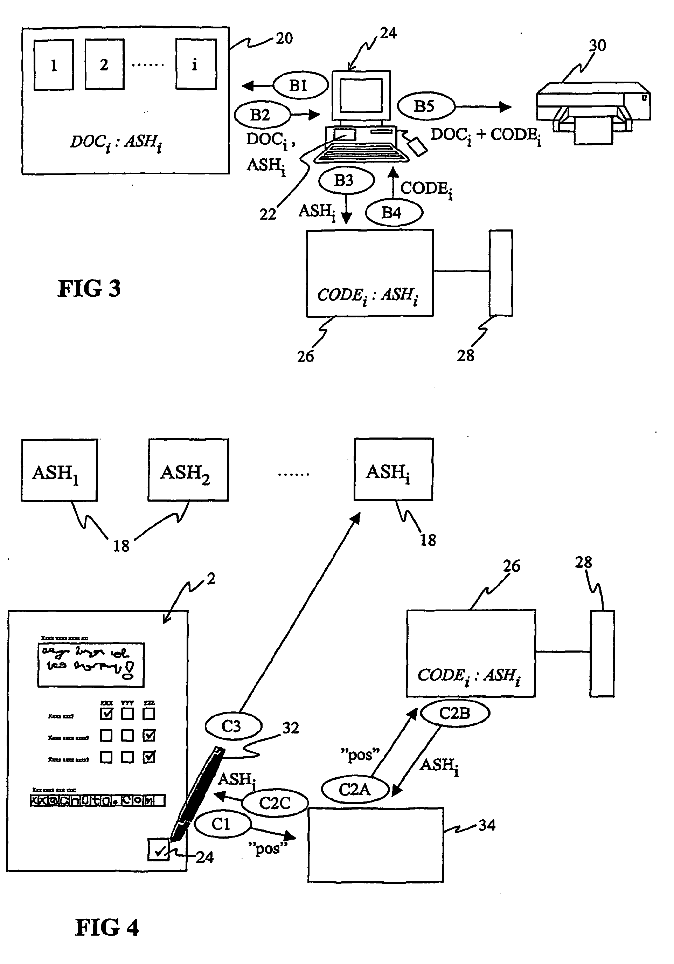

Fig. 3 illustrates an arrangement for printing a base 2 with a graphics layer and a coding layer.

The graphics repository 20 has a second interface for exposing and reading graphics files stored therein. A browser program 22, which is installed in a network-connected computer 24, is used to show through the second interface accessible graphics files DOC₁-DOCᵢ in the graphics repository 20. The graphics files can be shown on the display of the computer in the form of a list, a set of thumbnail images, an image map etc. The user can select one of the graphics files shown using a computer mouse, keyboard, speech control etc. When the user thus by the browser program selects a graphics file DOCᵢ to be printed (step B1), this graphics file DOCᵢ is returned to the browser program 22 through the second interface together with the associated network address ASHᵢ (step B2). Subsequently, the browser program 22 contacts, automatically or on command, a position assigner 26 with a request for position data to the coding layer (step B3). The request may contain an indication of number of pages, page format (A4, A3, B4, Letter etc.), number of printout copies and the associated network address ASHᵢ. Optionally, the indication of the number of pages and/or page format can be replaced by the graphics file DOCᵢ being included in the request. Alternatively the number of pages and/or the page format and/or the number of printout copies are given by standard settings in the position assigner 26, which means that such particulars need not be included in the request.

In certain cases, access to the PAD file may be necessary for the generation of the request for position data. For example, it may be necessary to include in the request information about the size and function of each active area to which position data is to be assigned. To this end, the PAD file can be stored in the graphics repository 20 to be read by the browser program 22. Alternatively, relevant information from the PAD file may be incorporated into the graphics file upon registration in the graphics repository 20. Thereby, the browser program 22 may at least partly create the request based on the PAD file.

The position assigner 26, which has access to a database 28 with at least part of the position/page space that is made up by the position code, allocates at least one unique position area (or at least one unique page identity) for each physical page and each printout copy in the request. In allocation, a marker is set in the position assigner 26 or the database 28 indicating that the position area (or the page identity) is blocked for further use. The position assigner 26 also stores a connection between the assigned position area (or page identity) and the network address ASHᵢ.

In response to the request, the position assigner 26 returns assignment data CODEᵢ corresponding to the allocated position area (or the allocated page identity) (step B4). The assignment data CODEᵢ may include either of, for example, one or more page addresses/identities, two opposite corner positions for the respective position area, a file with an algorithm for generating a corresponding position code, or a file containing a corresponding position code. The assignment data CODEᵢ can alternatively be represented by a single global position for a position area, after which the browser program 22 can compute the other allocated global positions for the position area since its size is known.

According to an alternative, a request is sent directly from the graphics repository 20 to the position assigner 26, after which the browser program 22 receives assignment data CODEᵢ from either the graphics repository 20 or the position assigner 26.

The browser program 22 then puts together a graphics layer, which is given by the graphics file DOCᵢ, and a coding layer, which is given by the assignment data CODEᵢ, in a printout file which is sent to a printer 3 to be printed on a suitable substrate, such as paper, plastic, laminate etc (step B5). Alternatively, this putting-together takes place in the printer 30. According to a further alternative, the request to the position assigner 26 is sent from the printer 30 instead which thus also receives the assignment data CODEᵢ.

Fig. 4 illustrates an arrangement for use of a printed base 2. For reasons of clarity, only the graphics layer is shown.

The user writes on the base 2 using a digital pen 32, which detects what is written in the form of sequences of positions forming electronic strokes. Then the pen 32 is caused to send the detected information, for instance by detecting positions within a "send" area 2A, known to the pen, on the base 2, or by the user activating a button (not shown) on the pen 32. The pen 32 is caused to send an address query to a router 34 at a predetermined network address (step C1). The address query may contain a page identity or a global position which has been decoded from the base. The global position can alternatively be sent in the form of the page address discussed by way of introduction.

The router 34 receives the address query and identifies the network address ASHᵢ of the current service handler 18. This may take place via a corresponding query to the position assigner 26 (steps C2A-C2B). Alternatively, the position assigner 26 can be designed to inform the router 34, in each allocation, of the associated connection between the assigned position area and the network address ASHᵢ. The router 34 may then also contain a cache memory (not shown) which stores the most recently routed and/or allocated position areas and the associated network addresses.

The router 34 then returns a reply message with the current network address ASHᵢ to the pen 32 (step C2C), which connects to this address and transfers the positions that have been detected on the base 2 (step C3). The thus transferred positions can be local or global, depending on whether the detected positions are converted from the global coordinate system of the position surface to the local coordinate system of the base by the digital pen 32 or by the service handler 18. If full pages on the continuous position surface are mapped against physical pages, this conversion can be effected with knowledge of the page division of the position surface. No conversion is needed when the position code directly codes both a page identity and local positions on the base. In case arbitrary position areas on the position surface are mapped against individual active areas on physical pages, the conversion may take place after a conversion query in the position assigner 26. Thus, the position assigner 26 could store a connection between the position of each active area in local positions and a corresponding allocated position area in global positions. Thus, the position assigner 26 can, when receiving a global position in an active area, return a corresponding local position.

The system according to Figs 2-4 is general in so far as each authorized user may select each registered graphics file to be printed with a position code. The system is also transparent by the user not having to be aware of the flow of data, or take any measures in addition to selecting a graphics file, to generate the printout. The system can also be made transparent for the user who wants to create a new graphics file and record this in the system. The data that is noted on the base is also transmitted automatically to the correct service handler in the system, without the user having to take any measures in addition to initiating the transmission.

With a view to avoiding reiterations, the following description of further embodiments is focused on differences from the above embodiment. The same reference numerals are used to indicate equivalent elements and steps.

### Second embodiment of information processing system

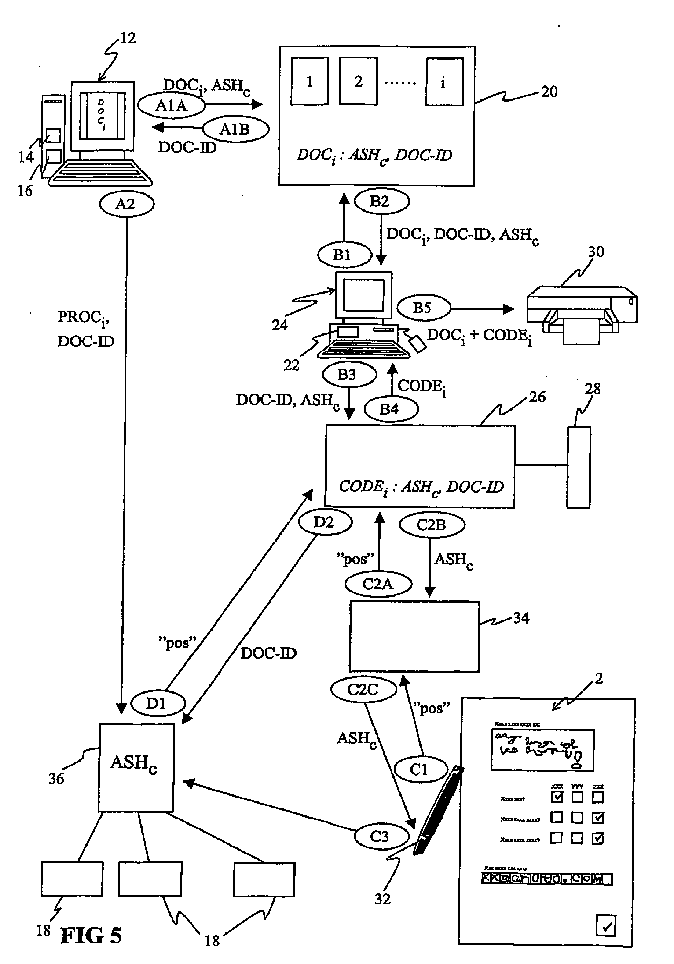

Fig. 5 illustrates an information processing system allowing access to a plurality of service handlers 18 at one and the same network address ASH_{c}, via a service administrator 36 at this network address. The system may contain several such service administrators 36 which each administer a plurality of service handlers 18. These service handlers 18 can be included in the same physical unit as the service administrator 36, or be separate from and network-connected to the same.

In the system according to Fig. 5, a document identifier (document ID, DOC-ID) is used to logically connect in the system the coding layer to the graphics layer of a base 2. Each document ID is essentially unique in the system and may contain characters and/or numbers with an arbitrary number base.

A document ID can be assigned to a graphics file DOCᵢ in connection with the creation thereof, i.e. in the designing computer 12. Alternatively, as shown in Fig. 5, the graphics repository 20 can be designed to assign a document ID in its registration of the graphics file DOCᵢ and return this to the designing computer 12 (step A1B). Thereupon, the processing program PROCᵢ and the associated document ID (and optionally the PAD file) may be transmitted to the service administrator 36 for recording (step A2).

In all cases, a document ID can be generated separate from the current graphics file DOCᵢ, for instance based on a character or number series, or a combination thereof, or by a random number generator. Such a document ID can be incorporated in the graphics file. It may in some cases, as will be discussed in more detail below, be advantageous to generate the document ID based on the contents of the current graphics file DOCᵢ, for instance by a hash operation on the entire graphics file or parts of the graphics file.

In its registration of the graphics file DOCᵢ, the graphics repository 20 stores a connection between the graphics file DOCᵢ and its document ID and also the network address ASH_{c} of the service administrator. However, the connection to the document ID may be inherent if the document ID is directly computable from the entire contents or parts of the contents of the graphics file.

The service administrator 36 receives the processing program PROCᵢ and the associated document ID (and optionally the PAD file), and stores the connection between them. The processing program PROCᵢ forms, as stated above, a service handler 18, but is not given a network address available to the pens 32 in the system.

Selection of graphics file, position assignment and printout are effected in the same way as in the previous embodiment. However, also the document ID is communicated from the graphics repository 20 to the position assigner 26 (step B3) which stores a connection between the assigned position area (or page identity) and the document ID, in addition to the connection to the network address ASH_{c} of the service administrator 36.

The printed base 2 is also used in the same way as in the previous embodiment. When receiving positions detected on the base 2 (after step C3), the service administrator 36 fetches the associated document ID to be able to identify the corresponding processing program PROCᵢ. To this end, the service administrator sends a request to the position assigner 26 containing a global position/page address/page identity which originates from the current base 2 (step D1). The position assigner 26 returns a reply message with the current document ID (step D2). Subsequently the service administrator 36 sends the received positions to the service handler 18 which is identified by the document ID in the received reply message.

It should be pointed out that the document ID can alternatively be transferred, automatically or on command, from the position assigner 26 to the router 34 which attaches the current document ID to the reply message to the pen 32, which in turn sends the document ID with the detected positions to the service administrator 36. In this case, the service administrator 36 need not send a separate request to the position assigner 26.

It will also be appreciated that the network address ASH_{c} of the service administrator 36 need not be stored and communicated in the system if the digital pens 32 are directly connected to one service administrator 36 only. This is also the case if the service administrator 36 is associated with a superordinate position area on the virtual position surface, for instance a segment or section, and the router is instructed to direct everything detected in this superordinate position area to a certain service administrator.

According to one more alternative (not shown), both the graphics file DOCᵢ and the processing program PROCᵢ (and optionally the PAD file) are sent to the graphics repository 20 to be stored therein. The service administrator 36 is designed to fetch, when receiving the document ID from the position assigner 26 or the pen 32, from the graphics repository 20 the processing program PROCᵢ which corresponds to the received document ID.

According to yet another alternative (not shown), the connection between the assigned position data CODEᵢ and the document ID is not stored in the position assigner 26. Instead, information about the assigned position data CODEᵢ is communicated, conveniently by the browser program 22, from the position assigner 26 to the graphics repository 20, which stores said connection. When receiving positions from a digital pen 32, the service administrator 36 consequently contacts instead the graphics repository 20 with said document ID request which contains a global position/page address/page identity.

### Third embodiment of information processing system

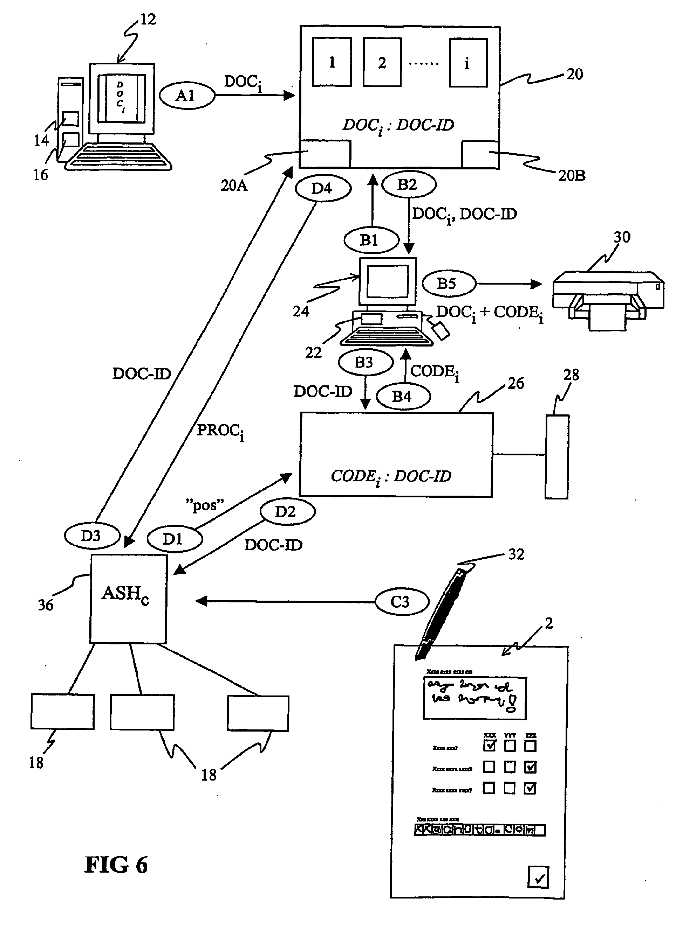

Fig. 6 illustrates an information processing system whose graphics repository 20 contains a file generator 20A which is capable of generating, on command or automatically, the processing program PROCᵢ based on the graphics file DOCᵢ.

In the same way as in the second embodiment of Fig. 5, the service administrator 36 fetches a current document ID on the basis of the received positions from the pen 32 (steps D1-D2). In the third embodiment of Fig. 6, however, the service administrator 36 then sends a request containing the current document ID to the graphics repository 20 (step D3). The graphics repository 20 identifies, on the basis of the received document ID, the corresponding graphics file DOCᵢ and applies the file generator 20A thereto for generating the processing program PROCᵢ, which is then sent to the service administrator 36 (step D4).

The service administrator 36 is conveniently designed to store such received processing programs PROCᵢ, with connection to the document ID, for reuse in any future receiving of positions from the associated base 2 in the system.

According to an alternative (not shown), the graphics repository 20 is designed to automatically generate, when recording a graphics file DOCᵢ, the processing program PROCᵢ and send this with the document ID to the service administrator 36 to be stored therein.

It will be appreciated that also the network address ASH_{c} of the service administrator 36 can be stored and communicated in the system like in the second embodiment of Fig. 5.

In the above embodiments, the selection of graphics file DOCᵢ to be printed is effected among the files that are stored in the graphics repository 20. However, it is possible for the browser program 22 to allow selection of a graphics file on an arbitrary unit, such as a local computer, a network-connected server etc. In this case, the browser program 22 verifies the selected graphics file against the files DOC₁-DOCᵢ in the graphics repository 20 before positions are allocated in the position assigner 26. This verification can be easily carried out if all document IDs in the system are computed based on the contents of the associated graphics file. In this case, the graphics repository 20, the browser program 22 or the position assigner 26 carries out a computation of the document ID for the selected graphics file and matches this against stored document IDs in the graphics repository. A corresponding matching can be carried out if the document ID is incorporated in the graphics file.

It may also be advantageous for the graphics repository 20 to contain a format converter (20B in Fig. 6). Thus the graphics files DOCᵢ can be stored in the graphics repository 20 in an image format, such as PNG, JPEG, GIF, TIFF or PDF, for display by the browser program 22. Before a graphics file DOCᵢ selected by the browser program 22 is transferred to the browser program 22, the format converter 20B is caused to convert the graphics file to a printout format, such as Postscript or PCL.

In some applications, it may be desirable for the service handler 18 also to have access to its corresponding graphics file, for instance in order to show the received position information against the background of the current graphics layer. In these cases, the graphics file can be stored with the processing program in the service handler 18 or the service administrator 36, or the service handler 18 or the service administrator 36 can be designed to request, when required, the current graphics file from the graphics repository, e.g. based on the document ID.

It should be pointed out that the above embodiments allow a user to modify a selected graphics file DOCᵢ before printout. In the first and second embodiments of Figs 2-5, the user is allowed to modify the graphics file DOCᵢ to such an extent that the active areas are not affected, for instance by adding further graphic information (text, images etc.) since also such modified graphics files can be processed by the existing processing program PROCᵢ. In the third embodiment of Fig. 6, the user has still greater freedom to create and record new graphics files based on existing graphics files in the graphics repository 22, since the processing program PROCᵢ can be generated on demand by the file generator 20A.

In the above embodiments, position data from the pens 32 is received by the service administrator 36, which forwards the entire position data or parts of the position data to the intended service handler 18. As an alternative to this forwarding, the service administrator 36 may return a network address to the pen 32, which has to connect to and transfer position data to the intended service handler 18 at this network address.

### Fourth embodiment of information processing system

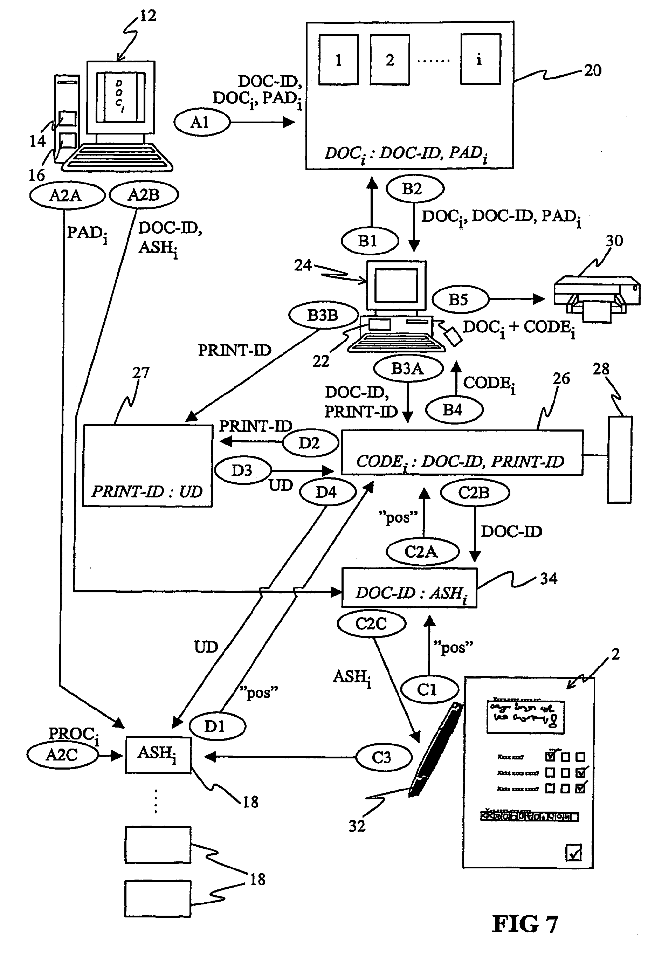

Fig. 7 illustrates an information processing system which is designed to conveniently allow for changes in the address of the service handler. To this end, the address is registered in the router 34 only, in association with a document ID which migrates in the system from the graphics repository 20 to the router 34 via the browser program 22 and the position assigner 26.

Before describing the fourth embodiment in some detail, certain further presumptions and definitions should be clarified.

The system is based on the above-mentioned logic pages, and includes digital templates that define properties of a certain part of the virtual position surface, for example a section, segment, book or shelf. These properties include size and location of logic pages on the virtual position surface, size and location of any predefined active areas on the logic pages, any predefined function of these active areas, etc. Such digital templates are further described in aforesaid WO 01/48685. In the present case, the virtual position surface comprises at least one segment that is dedicated to dynamic printing of documents. Consequently, the system includes one corresponding digital template for all logic pages of this segment.

A logic page given by such a digital template corresponds to a position code that can be applied as it is on a base. Alternatively, different partial areas of the position code of the logic page be "cut out" and arranged in a different spatial arrangement on a base. The different partial areas of the logic page may correspond to the predefined active areas, which may have predefined functions in the system.

In this fourth embodiment, the above-mentioned definition file (PAD file) is created to identify the relevant digital template, and the size and location of all selected and/or defined active areas in local coordinates on a logic page given by the template. It should be noted that the PAD file in not uniquely connected to any specific logic page at this stage, but rather to the range of logic pages within the segment given by the digital template.

After creation of the graphics layer in the designing computer 12, the graphics file DOCᵢ is registered, automatically or on command, in the graphics repository 20 (step A1), where it is stored in association with a unique document ID and the PAD file. Optionally, the document ID and/or the PAD file could be incorporated in the graphics file DOCᵢ. Automatically or on command, the PAD file is registered in the service handler (step A2A), and the association between the document ID and the service handler address ASHᵢ is registered in the router 34 (step A2B). Concurrently, the processing program PROCᵢ is developed and stored to form the service handler (step A2C).

The browser program 22 allows for selection and retrieval of a document DOCᵢ from the graphics repository 20, together with the associated document ID and PAD file (steps B1-B2). The browser program 22 also generates a document instance ID (print ID) to uniquely identify the specific position assignment/print-out. Thus, each print ID is essentially unique in the system and may contain characters and/or numbers with an arbitrary number base. The browser program 22 includes the document ID and the print ID in the request for position data that is sent to a first interface of the position assigner 26 (step B3A). The position assigner 26 allocates one or more logic pages, and returns assignment data CODEᵢ in the form of the page address(es) of the allocated logic page(s) (step B4). In this process, the position assigner 26 stores a connection between the range of allocated page addresses and the document ID and print ID. Concurrently, the browser program 22 may request instance data from an instance database 27, for example to include such data in the graphics layer on the base. The browser program 22 also submits the print ID to the instance database 27, which stores the association between the print ID and instance data (step B3B). For example, the instance database 27 may be an external database storing personal data of the different users of the system, such as names, addresses, company affiliations etc.

The browser program 22 then prepares the coding layer by arranging the local positions of the allocated logic page(s) according to the definitions of PAD file. The coding layer and the graphics layer are then sent to the printer for generation of the base (step B5).

In the process of generating and processing position data from the thus-printed base, an address query is first sent from the pen 34 to the router 34. The address query may include a global position or a page address given by the position code on the base (step C1). On receipt thereof, the router 34 submits a corresponding query to a second interface of the position assigner 26 (step C2A), whereupon the position assigner 26 returns the document ID that is associated with the page address as indicated by the query (step C2B). The router 34 then identifies the service handler address ASHᵢ from the thus-received document ID and submits this address to the pen 34 (step C2C). Then, the pen 34 sends detected position data to the address ASHᵢ, whereupon the processing program PROCᵢ is executed to process the position data, based on the definitions in the PAD file. In case instance data is needed, the service handler may send a request with the page address to a third interface of the position assigner 26 (step D1). Based on the page address, the position assigner 26 may identify the print ID and submit a corresponding request to the instance database 27 (step D2), which may return the instance data UD (step D3). Subsequently, the position assigner 26 may submit the instance data to the service handler. Alternatively, the print ID may be submitted in a request from the service handler to the instance database, after the service handler having obtained the print ID from the position assigner 26.

Thus, the print ID includes an identification of instance data to be accounted for in the processing of position data from a specific print-out at the service handler, and optionally to be included in the graphics layer on the base. As an alternative or complement to the use of an instance database 27, the print ID as such may include instance data, e.g. name, version number, etc, to be printed on the base and/or used by the service handler. Alternatively or additionally, the print ID as such may include a key, e.g. a network address, which allows the service handler to request instance data from the instance database.

It should be realized that the system of Fig 7 is equally applicable to a position code that directly codes a page identity and local positions on a base, as discussed above.

Likewise, it should be stated that the use of document instances and the instance database is optional.

### Fifth embodiment of information processing system

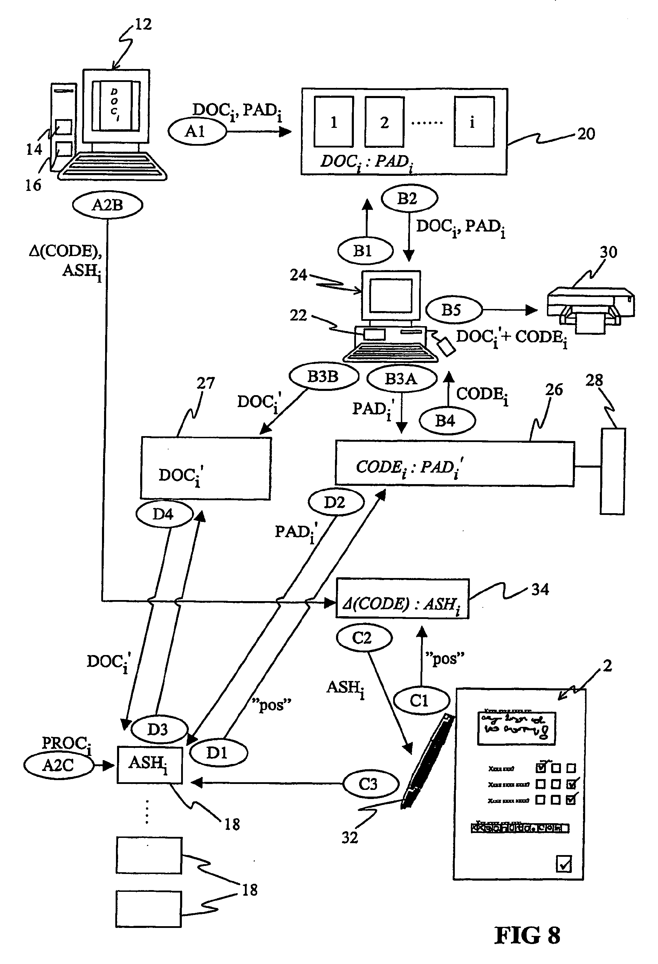

Fig. 8 illustrates an information processing system which is designed to allow the user to change the content of the graphic layer and/or the arrangement of the active areas before printing. The system is also designed to allow a service handler to process the contents of the graphics layer, in particular in relation to position data as received from the digital pen. To this end, PAD file instances and graphics file instances which define the coding layer and the graphics layer, respectively, of each printed base, are made accessible to the service handlers. Further, each service handler address is registered in the router in association with a unique part of the virtual position surface.

This fifth embodiment makes use of the digital templates and PAD files described in relation to the fourth embodiment. The following description focuses on differences over the fourth embodiment.

In step A1, the graphics file DOCᵢ and the associated PAD file are registered with the graphics repository 20. In step A2B, the service handler address ASHᵢ is registered in the router 34 in association with a superordinate part of the virtual position surface. This superordinate part is also identified in the PAD file. For example, the superordinate part may be a segment, section, shelf or book. In step A2C, the processing program PROCᵢ is stored at the address ASHᵢ.

In steps B1-B2, the browser program 22 is operated to obtain a graphics file DOCᵢ together with the associated PAD file from the graphics repository 20. Thereafter, the user may operate the computer 24 to edit the graphics file and/or to move/remove existing active areas and/or to add active areas that are predefined in the relevant digital template, as identified by the PAD file. Subsequently, the browser program 22 is operated to generate a graphics file instance DOCᵢ' from the possibly updated graphics file, and to submit the graphic file instance DOCᵢ' to an instance file server 27 (step B3B). The instance server 27 may be separate from the depository 20, since the graphic file instances DOCᵢ' may include user-specific, and potentially sensitive, information that needs strict access control. Concurrently, the browser program 22 is operated to generate an updated PAD file which reflects any changes of the original PAD file and which also includes a key for accessing the graphics file instance DOCᵢ' in the instance server 27. This updated PAD file forms a PAD file instance PADᵢ', which is submitted with the allocation request to the position assigner 26 (step B3A). In step B4, the position assigner 26 allocates one or more logic pages, and returns assignment data CODEᵢ in the form of the page address(es) of the allocated logic page(s). In this process, the position assigner 26 also stores the PAD file instance PADᵢ' in association with the allocated page address(es). The browser program 22 prepares the coding layer according to the definitions of the PAD file instance PADᵢ', and the graphics layer according to the graphics file instance DOCᵢ'. In step B5, the coding layer and the graphics layer are sent to the printer for generation of the base.

In steps C1-C3, the router 34 receives position data from the digital pen 32 and returns the relevant service handler address ASHᵢ to the pen 32 which in turn submits the position data to the service handler at this address.

In step D1, the service handler 18 submits a request for a PAD file instance to the position assigner 26. The request contains a global position or page address as received from the pen 32 in step C3. In step D2, the position assigner returns the relevant PAD file instance PADᵢ'. Based on the key included in the PAD file instance, the service handler may obtain the graphics file instance DOCᵢ' from the instance server 27 (steps D3-D4) .

In this embodiment, each processing program PROCᵢ is designed to operate with all PAD file instances that are based on the correct digital template, i.e. the digital template that defines the relevant superordinate part of the virtual position surface (as also registered in the router). Thus, each service handler may be regarded as effecting a general service in a respective field of application, such as note taking, electronic mail, multi-party document markup, automatic document editing, grading of tests, processing of selection forms, processing of inventory forms, processing of time reports, etc. To this end, the processing program PROCᵢ includes instructions to access the position data of the active areas identified in the PAD file instance, to operate on this data according to the predefined functions of the active areas, and to execute service-specific post-processing instructions on the resulting data.

Such post-processing instructions may include, e.g., incorporating the graphics file instance as a background image to the position data for display of handwritten data, compiling/outputting the resulting data in a specific format, or mapping the resulting data against the content of the graphics file instance. The post-processing instructions may also include retrieval of further instance data, for example as identified by a print ID as in the fourth embodiment. Such further instance data could for example be a master solution or key to be used in the grading of tests.

In a more advanced example, the processing program could be designed to access active areas that are not part of the digital template, but are defined in the editing operation in the computer 24. The PAD file instance may thus be created to also identify and define such user-defined active areas, either with reference to an agreed nomenclature or by incorporating corresponding processing instructions. Alternatively, the active areas are identified in the PAD file instance, whereas the processing instructions are incorporated in the graphics file instance.

In the above embodiment, the graphics files in the depository 20 could be regarded as sample files. Advantageously, the depository includes at least one sample file for each general service in the system.

The system may also include a default general service. Thus, whenever the user of the computer 24 chooses to print a graphical file which is not based on any file in the repository 20, a default PAD file instance is generated for a default digital template related to a default superordinate part of the virtual surface. For example, such a default general service may be designed simply to produce an image of the handwritten data superimposed on the graphical layer.

The skilled person will realize that the above embodiments, and alternatives thereof, may be combined by features of one embodiment being applied to another embodiment. For example, the digital templates and specific PAD files described above in relation to the fourth and fifth embodiments may also be used in the first, second and third embodiments.

In one alternative embodiment, the position assigner may be arranged to allocate predefined sets of logic pages to multiple page documents. For example, a full logic book may be allocated whenever the number of physical pages exceeds a given value. Such a logic book may be indicated by a page address of the format: section.segment.shelf.book.*, where the symbol * denotes all pages within the book.

In another alternative embodiment, the system allows for printing of identically position-coded copies of a graphics file. Thus, the position assigner only allocates one unique logic page for each physical page in the graphics file. In this case, data detected on the different copies are distinguished at the service handler by some other means than the detected positions as such, for example based on a unique pen identifier received with the position data, a handwritten reference/command included in the position data, etc.

The drawings illustrate the graphics repository 20, the position assigner 26, the router 34, the service administrator 36, and the instance server 27 as separate physical units. Such a modular construction may be preferred for reasons of administration or manufacture. However, it is possible to implement at least some of them in one and the same physical unit, for instance in order to reduce delays in the system. According to one alternative, the graphics repository 20 and the position assigner 26 may be combined in one and the same physical unit. According to another alternative, the position assigner 26 and the router 34 may be combined in one and the same physical unit.

These physical units are typically network-connected computers or servers with software which, when executed in an internal processor, implement the processes that are performed in the respective units.

It is also to be noted that the above principles for on-demand printing of coded bases are applicable within a public network, within a private network, locally within a personal computer or the like, or within any combination thereof.

## Claims

1. An arrangement for use in an information processing system which comprises at least one digital unit (32) which is designed to detect position data on a coded base (2), the coded base (2) partly being generated from a graphical object which defines graphic information, and at least one processing unit (18; 36) which is designed to receive, from the digital unit (32), said position data and process said position data according to predetermined rules, each graphical object in the system corresponding to a rule object which is assigned to said at least one processing unit to define said rules, said arrangement being **characterized by** :
a storage unit (20) with a first interface for receiving and storing graphical objects, and a second interface for exposing and reading thus stored graphical objects; and
an allocation unit (26) which is designed to assign on command, from a position data bank (28), position data for a current graphical object, and to provide in the system allocation data which associates said assigned position data with the current graphical object;
said arrangement allowing, by the second interface of the storage unit (20), selection of the current graphical object and providing, by the allocation unit (26), said assigned position data, and thus allowing application of said graphic information and said assigned position data to a substrate for forming the coded base (2).

2. The arrangement as claimed in claim 1, further comprising a directing unit (34) which is designed to direct, on the basis of said allocation data, said position data from the digital unit (32) to a current processing unit (18; 36) among a plurality of processing units in the system.

3. The arrangement as claimed in claim 2, wherein said allocation data comprises an address identifier which is associated with a network address of said at least one processing unit (18; 36).

4. The arrangement as claimed in claim 3, wherein the directing unit (34) is designed to receive at least a subset of said position data from the digital unit (32), identify on the basis of said position data said address identifier for the current processing unit (18; 36), and send said address identifier to the digital unit (32).

5. The arrangement as claimed in claim 4, wherein the allocation unit (26) is adapted to transfer said address identifier to said directing unit (34), preferably in response to an address query from the same and based on position data included in said address query.

6. The arrangement as claimed in claim 5, wherein each graphical object is associated with a respective address identifier in the storage unit (20) which is adapted to transfer to said allocation unit (26) said address identifier for the current processing unit (18).

7. The arrangement as claimed in claim 6, wherein the storage unit (20) is adapted to provide said address identifier in connection with the reading of the current graphical object through the second interface, and wherein the allocation unit (26) is adapted to receive said address identifier in connection with the assigning of position data for the current graphical object.

8. The arrangement as claimed in any one of claims 2-7, wherein the directing unit (34) is designed to fetch said allocation data from the allocation unit (26) and to send at least a subset of said allocation data to the digital unit to be transferred to the current processing unit (18; 36).

9. The arrangement as claimed in any one of claims 2-7, wherein the current processing unit (18; 36) is designed to fetch at least a subset of said allocation data when receiving said position data from the digital unit (32).

10. The arrangement as claimed in any one of the preceding claims, wherein said allocation data comprises an object identifier which is associated with the current graphical object.

11. The arrangement as claimed in claim 10, which allows the current processing unit (18; 36), when receiving said position data from said at least one digital unit, to identify said assigned rule object on the basis of said object identifier.

12. The arrangement as claimed in claim 10 or 11,
wherein each graphical object is assigned an object identifier which is essentially unique in the system.

13. The arrangement as claimed in claim 12, wherein all object identifiers in the system at least are stored in the storage unit (20).

14. The arrangement as claimed in claim 13, wherein the arrangement allows said selection of the current graphical object only if the object identifier for a selected graphical object corresponds to one of the object identifiers stored in the storage unit (20).

15. The arrangement as claimed in any one of claims 10-14, wherein the object identifier is incorporated in the associated graphical object.

16. The arrangement as claimed in any one of claims 10-14, wherein the object identifier is computable based on the graphical object.

17. The arrangement as claimed in any one of the preceding claims, further comprising a browser unit (12) which is connected to the second interface of the storage unit (20) and comprises a display for exposing said graphical object and a means for selecting the current graphical object among graphical objects exposed on said display.

18. The arrangement as claimed in any one of the preceding claims, which is adapted to generate the coded base (2) by printing on demand of said graphic information and said position data on said substrate.

19. The arrangement as claimed in any one of the preceding claims, wherein said position data is incorporated in the coded base (2) in the form of a computer readable position code (A), which is readable by means of said at least one digital unit (32).

20. The arrangement as claimed in any one of the preceding claims, wherein the storage unit (20) comprises a format converter (20B) which is adapted to convert the graphical object from a first format into a second format.

21. The arrangement as claimed in claim 20, wherein the first format is an image file format, such as PNG, JPEG, GIF, TIFF or PDF, and the second format is a print file format, such as Postscript or PCL.

22. The arrangement as claimed in any one of the preceding claims, wherein the storage unit (20) comprises a rule object generator (20A) which is designed to generate said rule object from said graphical object, and wherein the storage unit (20) is adapted to provide the thus generated rule object in the system.

23. An information processing system, which comprises at least one digital unit (32) which is designed to detect position data on a coded base (2); a processing unit (18; 36) which is designed to receive from the digital unit (32) said position data and process the same according to predetermined rules, and an arrangement according to any one of claims 1-22.

24. A method of performing, in an information processing system, generation on demand of a position-coded base (2), **characterized by** the steps of:
detecting a selection of a current graphical object among a set of graphical objects pre-stored in the system, each defining graphic information and corresponding to a rule object which connects at least one measure to the graphic information;
assigning from a position data bank (28) position data for the current graphical object;
applying said assigned position data and the graphic information defined by the current graphical object to a substrate for forming said base (2); and
providing in the system allocation data which associates said assigned position data with the current graphical object in such a manner that position data read from the base (2) can be processed using the rule object that corresponds to the current graphical object.

25. The method as claimed in claim 24, wherein the rule object connects said at least one measure to at least one position in a local coordinate system which is defined relative to a reference point in the graphic information, which method comprises converting said read position data into at least one position in said local coordinate system prior to processing.

26. The method as claimed in claim 25, wherein said assigned position data contains at least one position in a set of positions, which is divided into predetermined groups of positions, and wherein the step of converting said read position data is carried out with knowledge of the division of the set of positions.

27. The method as claimed in claim 25, wherein said allocation data comprises a connection between said assigned position data and at least one corresponding position in said local coordinate system, and wherein the step of converting said read position data is carried out based on said allocation data.

28. The method as claimed in any one of claims 24-27, wherein said rule object defines said measures in relation to a position data reference point, which is implicitly connected to the graphic information via a predetermined spatial interrelationship between the graphic information and the assigned position data on said substrate.

29. The method as claimed in any one of claims 24-28, wherein said allocation data comprises an address identifier, which is associated with a network address of a processing unit (18; 36) to which said rule object in the system is assigned.

30. The method as claimed in any one of claims 24-29, wherein said allocation data comprises an object identifier which is associated with the current graphical object.

## Patentansprüche

1. Anordnung zur Verwendung in einem Informationsverarbeitungssystem, das mindestens eine digitale Einheit (32), die dafür ausgelegt ist, Positionsdaten auf einer codierten Basis (2) zu detektieren, wobei die codierte Basis (2) teilweise aus einem grafischen Objekt erzeugt wird, das grafische Informationen definiert, und mindestens eine Verarbeitungseinheit (18; 36), die dafür ausgelegt ist, von der digitalen Einheit (32) die Positionsdaten zu empfangen und die Positionsdaten gemäß vorbestimmten Regeln zu verarbeiten, umfasst, wobei jedes grafische Objekt in dem System einem Regelobjekt entspricht, das an die mindestens eine Verarbeitungseinheit vergeben wird, um die Regeln zu definieren, wobei die Anordnung durch Folgendes **gekennzeichnet** ist:
eine Speichereinheit (20) mit einer ersten Schnittstelle zum Empfangen und Speichern von grafischen Objekten und einer zweiten Schnittstelle zum Exponieren und Lesen so gespeicherter grafischer Objekte; und
eine Zuteilungseinheit (26), die dafür ausgelegt ist, auf Befehl von einer Positionsdatenbank (28) Positionsdaten für ein aktuelles grafische Objekt zu vergeben und in dem System Zuteilungsdaten bereitzustellen, die die vergebenen Positionsdaten mit dem aktuellen grafischen Objekt assoziieren;
wobei die Anordnung durch die zweite Schnittstelle der Speichereinheit (20) die Auswahl des aktuellen grafischen Objekts erlaubt und durch die Zuteilungseinheit (26) die vergebenen Positionsdaten bereitstellt und somit die Anwendung der grafischen Informationen und der vergebenen Positionsdaten auf ein Substrat zur Bildung der codierten Basis (2) erlaubt.

2. Anordnung nach Anspruch 1, die ferner eine Lenkeinheit (34) umfasst, die dafür ausgelegt ist, auf der Basis der Zuteilungsdaten die Positionsdaten aus der digitalen Einheit (32) zu einer aktuellen Verarbeitungseinheit (18; 36) von mehreren Verarbeitungseinheiten in dem System zu lenken.

3. Anordnung nach Anspruch 2, wobei die Zuteilungsdaten eine Adressenkennung umfassen, die mit einer Netzwerkadresse der mindestens einen Verarbeitungseinheit (18; 36) assoziiert ist.

4. Anordnung nach Anspruch 3, wobei die Lenkeinheit (34) dafür ausgelegt ist, mindestens eine Teilmenge der Positionsdaten von der digitalen Einheit (32) zu empfangen, auf der Basis der Positionsdaten die Adressenkennung für die aktuelle Verarbeitungseinheit (18; 36) zu identifizieren und die Adressenkennung zu der digitalen Einheit (32) zu senden.

5. Anordnung nach Anspruch 4, wobei die Zuteilungseinheit (26) dafür ausgelegt ist, die Adressenkennung zu der Lenkeinheit (34) vorzugsweise als Reaktion auf eine Adressenanfrage von dieser und auf der Basis von in der Adressenanfrage enthaltenen Positionsdaten zu übermitteln.

6. Anordnung nach Anspruch 5, wobei jedes grafische Objekt mit einer jeweiligen Adressenkennung in der Speichereinheit (20) assoziiert ist, die dafür ausgelegt ist, die Adressenkennung für die aktuelle Verarbeitungseinheit (18) zu der Zuteilungseinheit (26) zu übermitteln.

7. Anordnung nach Anspruch 6, wobei die Speichereinheit (20) dafür ausgelegt ist, die Adressenkennung in Verbindung mit dem Lesen des aktuellen grafischen Objekts durch die zweite Schnittstelle bereitzustellen, und wobei die Zuteilungseinheit (26) dafür ausgelegt ist, die Adressenkennung in Verbindung mit der Vergabe von Positionsdaten für das aktuelle grafische Objekt zu empfangen.

8. Anordnung nach einem der Ansprüche 2-7, wobei die Lenkeinheit (34) dafür ausgelegt ist, die Zuteilungsdaten von der 2uteilungseinheit (26) abzurufen und mindestens eine zu der aktuellen Verarbeitungseinheit (18; 36) zu übermittelnde Teilmenge der Zuteilungsdaten zu der digitalen Einheit zu senden.

9. Anordnung nach einem der Ansprüche 2-7, wobei die aktuelle Verarbeitungseinheit (18; 36) dafür ausgelegt ist, mindestens eine Teilmenge der Zuteilungsdaten abzurufen, wenn die Positionsdaten aus der digitalen Einheit (32) empfangen werden.

10. Anordnung nach einem der vorhergehenden Ansprüche, wobei die Zuteilungsdaten eine Objektkennung umfassen, die mit dem aktuellen grafischen Objekt assoziiert ist.

11. Anordnung nach Anspruch 10, die es der aktuellen Verarbeitungseinheit (18; 36) beim Empfangen der Positionsdaten aus der mindestens einen digitalen Einheit erlaubt, auf der Basis der Objektkennung das vergebene Regelobjekt zu identifizieren.

12. Anordnung nach Anspruch 10 oder 11, wobei eine Objektkennung an jedes grafische Objekt vergeben wird, die im Wesentlichen in dem System einzigartig ist.

13. Anordnung nach Anspruch 12, wobei alle Objektkennungen in dem System mindestens in der Speichereinheit (20) gespeichert sind.

14. Anordnung nach Anspruch 13, wobei die Anordnung die Auswahl des aktuellen grafischen Objekts nur dann erlaubt, wenn die Objektkennung für ein gewähltes grafisches Objekt einer der in der Speichereinheit (20) gespeicherten Objektkennungen entspricht.

15. Anordnung nach einem der Ansprüche 10-14, wobei die Objektkennung in das assoziierte grafische Objekt integriert ist.

16. Anordnung nach einem der Ansprüche 10-14, wobei die Objektkennung auf der Basis des grafischen Objekts berechenbar ist.

17. Anordnung nach einem der vorhergehenden Ansprüche, die ferner eine Browser-Einheit (12) umfasst, die mit der zweiten Schnittstelle der Speichereinheit (20) verbunden ist und ein Display zum Exponieren des grafischen Objekts und ein Mittel zum Auswählen des aktuellen grafischen Objekts unter auf dem Display exponierten grafischen Objekten umfasst.

18. Anordnung nach einem der vorhergehenden Ansprüche, die dafür ausgelegt ist, die codierte Basis (2) durch Drucken der grafischen Informationen und der Positionsdaten auf das Substrat auf Bedarf zu erzeugen.

19. Anordnung nach einem der vorhergehenden Ansprüche, wobei die Positionsdaten in Form eines computerlesbaren Positionscodes (A), der mittels der mindestens einen digitalen Einheit (32) lesbar ist, in die codierte Basis (2) integriert sind.

20. Anordnung nach einem der vorhergehenden Ansprüche, wobei die Speichereinheit (20) einen Formatumsetzer (20B) umfasst, der dafür ausgelegt ist, das grafische Objekt aus einem ersten Format in ein zweites Format umzusetzen.

21. Anordnung nach Anspruch 20, wobei das erste Format ein Bilddateiformat wie zum Beispiel PNG, JPEG, GIF, TIFF oder PDF ist und das zweite Format ein Druckdateiformat wie zum Beispiel Postscript oder PCL ist.

22. Anordnung nach einem der vorhergehenden Ansprüche, wobei die Speichereinheit (20) einen Regelobjektgenerator (20A) umfasst, der dafür ausgelegt ist, das Regelobjekt aus dem grafischen Objekt zu erzeugen, und wobei die Speichereinheit (20) dafür ausgelegt ist, das so erzeugte Regelobjekt in dem System bereitzustellen.

23. Informationsverarbeitungssystem, das Folgendes umfasst: mindestens eine digitale Einheit (32), die dafür ausgelegt ist, Positionsdaten auf einer codierten Basis (2) zu detektieren; eine Verarbeitungseinheit (18; 36), die dafür ausgelegt ist, von der digitalen Einheit (32) die Positionsdaten zu empfangen und diese gemäß vorbestimmten Regeln zu verarbeiten, und eine Anordnung nach einem der Ansprüche 1-22.

24. Verfahren zur Durchführung der Erzeugung einer positionscodierten Basis (2) auf Bedarf in einem Informationsverarbeitungssystem, **gekennzeichnet durch** die folgenden Schritte:
Detektieren einer Auswahl eines aktuellen grafischen Objekts aus einer Menge von in dem System vorgespeicherten grafischen Objekten, die jeweils grafische Informationen definieren und
einem Regelobjekt entsprechen, das mindestens eine Maßnahme mit den grafischen Informationen verbindet;
Vergeben von Positionsdaten für das aktuelle grafische Objekt von einer Positionsdatenbank (28);
Anwenden der vergebenen Positionsdaten und der grafischen Informationen, die **durch** das aktuelle grafische Objekt definiert werden, auf ein Substrat zur Bildung der Basis (2); und
Bereitstellen von Zuteilungsdaten in dem System, die die vergebenen Positionsdaten mit dem aktuellen grafischen Objekt assoziieren, dergestalt, dass aus der Basis (2) gelesene Positionsdaten unter Verwendung des Regelobjekts, das dem aktuellen grafischen Objekt entspricht, verarbeitet werden können.

25. Verfahren nach Anspruch 24, wobei das Regelobjekt das mindestens eine Maßnahme mit mindestens einer Position in einem lokalen Koordinatensystem verbindet, das relativ zu einem Bezugspunkt in den grafischen Informationen definiert ist, wobei das Verfahren das Umsetzen der gelesenen Positionsdaten in mindestens eine Position in dem lokalen Koordinatensystem vor der Verarbeitung umfasst.

26. Verfahren nach Anspruch 25, wobei die vergebenen Positionsdaten mindestens eine Position in einer Menge von Positionen enthalten, die in vorbestimmte Gruppen von Positionen aufgeteilt wird, und wobei der Schritt des Umsetzens der gelesenen Positionsdaten mit Kenntnis der Aufteilung der Menge von Positionen ausgeführt wird.

27. Verfahren nach Anspruch 25, wobei die Zuteilungsdaten eine Verbindung zwischen den vergebenen Positionsdaten und mindestens einer entsprechenden Position in dem lokalen Koordinatensystem umfassen und wobei der Schritt des Umsetzens der gelesenen Positionsdaten auf der Basis der Zuteilungsdaten ausgeführt wird.

28. Verfahren nach einem der Ansprüche 24-27, wobei das Regelobjekt die Maßnahmen in Bezug auf einen Positionsdaten-Bezugspunkt definiert, der über eine vorbestimmte räumliche Beziehung zwischen den grafischen Informationen und den vergebenen Positionsdaten auf dem Substrat implizit mit den grafischen Informationen verbunden ist.

29. Verfahren nach einem der Ansprüche 24-28, wobei die Zuteilungsdaten eine Adressenkennung umfassen, die mit einer Netzwerkadresse einer Verarbeitungseinheit (18; 36) assoziiert ist, an die das Regelobjekt in dem System vergeben ist.

30. Verfahren nach einem der Ansprüche 24-29, wobei die Zuteilungsdaten eine Objektkennung umfassen, die mit dem aktuellen grafischen Objekt assoziiert ist.

## Revendications

1. Agencement destiné à être utilisé dans un système de traitement d'informations qui comprend au moins une unité numérique (32) qui est conçue pour détecter des données de position sur une base codée (2), la base codée (2) étant partiellement générée à partir d'un objet graphique qui définit des informations graphiques, et au moins une unité de traitement (18 ; 36) qui est conçue pour recevoir, depuis l'unité numérique (32), lesdites données de position et traiter lesdites données de position en fonction de règles prédéterminées, chaque objet graphique dans le système correspondant à un objet de règle qui est assigné à ladite au moins une unité de traitement afin de définir lesdites règles, ledit agencement étant **caractérisé par**
une unité de stockage (20) à première interface pour recevoir et stocker des objets graphiques, et seconde interface pour exposer et lire les objets graphiques ainsi stockés ; et
une unité d'attribution (26) qui est conçue pour assigner sur commande, depuis une banque de données de position (28), des données de position à un objet graphique courant, et fournir dans le système des données d'attribution qui associent lesdites données de position assignées à l'objet graphique courant ;
ledit agencement permettant, par la seconde interface de l'unité de stockage (20), la sélection de l'objet graphique courant et la fourniture, par l'unité d'attribution (26), desdites données de position assignées, et permettant ainsi l'application desdites informations graphiques et desdites données de position assignées à un substrat pour former la base codée (2).

2. Agencement selon la revendication 1, comprenant en outre une unité d'orientation (34) qui est conçue pour orienter, en fonction desdites données d'attribution, lesdites données de position depuis l'unité numérique (32) vers une unité de traitement courante (18 ; 36) parmi une pluralité d'unités de traitement dans le système.

3. Agencement selon la revendication 2, dans lequel lesdites données d'attribution comprennent un identifiant d'adresse qui est associé à une adresse réseau de ladite au moins une unité de traitement (18 ; 36).

4. Agencement selon la revendication 3, dans lequel l'unité d'orientation (34) est conçue pour recevoir au moins un sous-ensemble desdites données de position depuis l'unité numérique (32), identifier en fonction desdites données de position ledit identifiant d'adresse de l'unité de traitement courante (18 ; 36), et envoyer ledit identifiant d'adresse à l'unité numérique (32).

5. Agencement selon la revendication 4, dans lequel l'unité d'attribution (26) est adaptée pour transférer ledit identifiant d'adresse à l'unité d'orientation (34), de préférence en réponse à une interrogation d'adresse depuis celle-ci et en fonction de données de position incluses dans ladite interrogation d'adresse.

6. Agencement selon la revendication 5, dans lequel chaque objet graphique est associé à un identifiant d'adresse respectif dans l'unité de stockage (20) qui est adaptée pour transférer à ladite unité d'attribution (26) ledit identifiant d'adresse de l'unité de traitement courante (18).

7. Agencement selon la revendication 6, dans lequel l'unité de stockage (20) est adaptée pour fournir ledit identifiant d'adresse conjointement à la lecture de l'objet graphique courant par le biais de la seconde interface, et dans lequel l'unité d'attribution (26) est adaptée pour recevoir ledit identifiant d'adresse conjointement à l'assignation de données de position pour l'objet graphique courant.

8. Agencement selon l'une quelconque des revendications 2 à 7, dans lequel l'unité d'orientation (34) est conçue pour extraire lesdites données d'attribution depuis l'unité d'attribution (26) et envoyer au moins un sous-ensemble desdites données d'attribution à l'unité numérique afin de les transférer à ladite unité de traitement courante (18 ; 36).

9. Agencement selon l'une quelconque des revendications 2 à 7, dans lequel l'unité de traitement courante (18 ; 36) est conçue pour extraire au moins un sous-ensemble desdites données d'attribution lors de la réception desdites données de position depuis l'unité numérique (32).

10. Agencement selon l'une quelconque des revendications précédentes, dans lequel lesdites données d'attribution comprennent un identifiant d'objet qui est associé à l'objet graphique courant.

11. Agencement selon la revendication 10, lequel permet à l'unité de traitement courante (18 ; 36), quand elle reçoit lesdites données de position depuis ladite au moins une unité numérique, d'identifier ledit objet de règle assigné en fonction dudit identifiant d'objet.

12. Agencement selon la revendication 10 ou 11, dans lequel à chaque objet graphique est assigné un identifiant d'objet qui est essentiellement unique dans le système.

13. Agencement, selon la revendication 12, dans lequel tous les identifiants d'objets dans le système au moins sont stockés dans l'unité de stockage (20).

14. Agencement selon la revendication 13, dans lequel l'agencement permet ladite sélection de l'objet graphique courant uniquement si l'identifiant d'objet d'un objet graphique sélectionné correspond à l'un des identifiants d'objet stockés dans l'unité de stockage (20).

15. Agencement selon l'une quelconque des revendications 10 à 14, dans lequel l'identifiant d'objet est incorporé dans l'objet graphique associé.

16. Agencement selon l'une quelconque des revendications 10 à 14, dans lequel l'identifiant d'objet est calculable en fonction de l'objet graphique.

17. Agencement selon l'une quelconque des revendications précédentes, comprenant en outre une unité de navigation (12) qui est connectée à la seconde interface de l'unité de stockage (20) et comprend un affichage pour exposer ledit objet graphique et un moyen pour sélectionner l'objet graphique courant parmi les objets graphiques exposés sur ledit affichage.

18. Agencement selon l'une quelconque des revendications précédentes, lequel est adapté pour générer la base codée (2) en imprimant à la demande lesdites informations graphiques et lesdites données de position sur ledit substrat.

19. Agencement selon l'une quelconque des revendications précédentes, dans lequel lesdites données de position sont incorporées dans la base codée (2) sous forme de code de position lisible par ordinateur (A), lequel est lisible au moyen de ladite au moins une unité numérique (32).

20. Agencement selon l'une quelconque des revendications précédentes, dans lequel l'unité de stockage (20) comprend un convertisseur de format (20B) qui est adapté pour convertir l'objet graphique d'un premier format en un second format.

21. Agencement selon la revendication 20, dans lequel le premier format est un format de fichier d'image, tel que PNG, JPEG, GIF, TIFF ou PDF, et le second format est un format de fichier d'impression, tel que Postscript ou PCL.

22. Agencement selon l'une quelconque des revendications précédentes, dans lequel l'unité de stockage (20) comprend un générateur d'objets de règles (20A) qui est conçu pour générer ledit objet de règle à partir dudit objet graphique, et dans lequel l'unité de stockage (20) est adaptée pour fournir l'objet de règle ainsi généré dans le système.

23. Système de traitement d'informations, lequel comprend au moins une unité numérique (32) qui est conçue pour détecter des données de position sur une base codée (2) ; une unité de traitement (18 ; 36) qui est conçue pour recevoir depuis l'unité numérique (32) lesdites données de position et traiter celles-ci en fonction de règles prédéterminées, et un agencement selon l'une quelconque des revendications 1 à 22.

24. Procédé d'exécution, dans un système de traitement d'informations, d'une génération à la demande d'une base codée en position (2), **caractérisé par** les étapes de :
détection d'une sélection d'un objet graphique courant parmi un ensemble d'objets graphiques préstockés dans le système, chacun définissant des informations graphiques et correspondant à un objet de règle qui connecte au moins une mesure aux informations graphiques ;
l'assignation depuis une banque de données de position (28) de données de position à l'objet graphique courant ;
l'application desdites données de position assignées et des informations graphiques définies par l'objet graphique courant à un substrat pour former ladite base (2) ; et
la fourniture dans le système de données d'attribution qui associe lesdites données de position assignées à l'objet graphique courant de façon à ce que les données de position lues sur la base (2) puissent être traitées au moyen de l'objet de règle qui correspond à l'objet graphique courant.

25. Procédé selon la revendication 24, dans lequel l'objet de règle connecte ladite au moins une mesure à l'au moins une position dans un système de coordonnées locales qui est défini par rapport à un point de référence dans les informations graphiques, ledit procédé comprenant la conversion desdites données de position lues en au moins une position dans ledit système de coordonnées locales avant le traitement.

26. Procédé selon la revendication 25, dans lequel lesdites données de position assignées contiennent au moins une position dans un ensemble de positions, lequel est divisé en groupes prédéterminés de positions, et dans lequel l'étape de conversion desdites données de position lues est effectuée en connaissant la division de l'ensemble de positions.

27. Procédé selon la revendication 25, dans lequel lesdites données d'attribution comprennent une connexion entre lesdites données de position assignées et au moins une position correspondante dans ledit système de coordonnées locales, et dans lequel l'étape de conversion desdites données de position lues est effectuée en fonction desdites données d'attribution.

28. Procédé selon l'une quelconque des revendications 24 à 27, dans lequel ledit objet de règle définit lesdites mesures relativement à un point de référence de données de position, lequel est connecté implicitement aux informations graphiques par l'intermédiaire d'une interrelation spatiale prédéterminée entre les informations graphiques et les données de position assignées sur ledit substrat.

29. Procédé selon l'une quelconque des revendications 24 à 28, dans lequel lesdites données d'attribution comprennent un identifiant d'adresse, lequel est associé à une adresse réseau d'une unité de traitement (18 ; 36) à laquelle ledit objet de règle dans le système est assigné.

30. Procédé selon l'une quelconque des revendications 24 à 29, dans lequel lesdites données d'attribution comprennent un identifiant d'objet qui est associé à l'objet graphique courant.
